# EUROPEAN PATENT APPLICATION

(11) **EP 2 219 248 A1**
(43) Date of publication of application: **18.08.2010**
(21) Application number: 10001283.0
(22) Date of filing: 08.02.2010
(51) Int. Cl.: H01M 2/26, H01M 4/66, H01M 10/04, H01M 10/052, H01M 10/0585

(54) **Electrode sheet, secondary battery and method for manufacturing the secondary battery**

(30) Priority: 13.02.2009 JP 2009031463
(71) Applicant: Sharp Kabushiki Kaisha, Osaka-shi, Osaka 545-8522 (JP)
(72) Inventor: Sakashita, Kazuya, Osaka-shi, Osaka 545-8522 (JP); Nishimura, Naoto, Osaka-shi, Osaka 545-8522 (JP)
(74) Representative: Müller - Hoffmann & Partner

(57) **Abstract**

An electrode sheet of the present invention is a positive electrode sheet formed by laminating a conductive layer and a positive electrode active material layer in this order on each surface of a resin film, or is a negative electrode sheet formed by laminating a conductive layer and a negative electrode active material layer in this order on each surface of a resin film, each of the positive and the negative electrode active material layers being partially provided to the conductive layer, wherein the electrode sheet has a partially folded section where the electrode sheet with the conductive layer but without the positive and the negative electrode active material layers is folded twice or more in the same direction, and the conductive layers provided on the both surfaces of the resin film are electrically connected with each other in the folded section.

## Description

### CROSS-REFERENCE TO RELATED APPLICATION

This application is related to Japanese Patent Application No. 2009-031463 filed on February 13, 2009, whose priority is claimed under 35 USC §119, and the disclosure of which is incorporated by reference in its entirety.

### BACKGROUND OF THE INVENTION

### Field of the Invention

The present invention relates to an electrode sheet, a secondary battery, and a method for manufacturing the secondary battery.

### Description of the Related Art

In recent years, secondary batteries, such as a lithium-ion secondary battery, a nickel metal-hydride storage battery and a nickel-cadmium storage battery, are in use as power supplies of small-sized mobile electronic instruments, such as a cellular phone, a mobile personal computer and a mobile camera. Such secondary batteries are in use especially for slim-type, small-sized mobile electronic instruments.

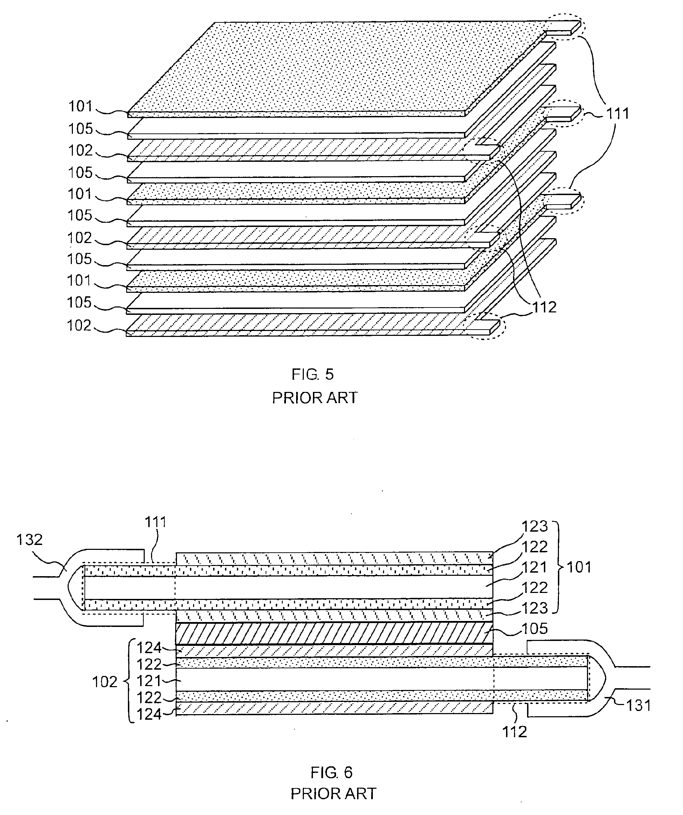

An internal structure of a conventional secondary battery is that, as shown in Figs. 5 and 6, positive electrode sheets 101 and negative electrode sheets 102 are alternately arranged, and separators 105 having pores are alternately arranged between the positive electrode sheet 101 and the negative electrode sheet 102, and the positive and the negative electrode sheet and the separator package with a package material together with an electrolyte (e.g., see Japanese Unexamined Patent Publication No. Hei 11(1999)-102711). It is to be noted that Fig. 5 is a perspective view of an internal structure of a conventional stacked secondary battery. Further, Fig. 6 is a schematic sectional view of the conventional stacked secondary battery. Moreover, as shown in Fig. 6, in the positive electrode sheet 101, positive electrode active material layers 123 is formed on both surfaces of a resin film 121 with metal layers (conductive layers 122) formed on both surfaces thereof. In the negative electrode sheet 102, negative electrode active material layers 124 is formed on both surfaces of a resin film 121 with metal layers (conductive layers 122) formed on both surfaces thereof. Furthermore, a secondary battery is also known which uses a metal foil in place of the resin film 121 with the conductive layers 122 formed on both surfaces thereof. It is to be noted that the secondary battery with the positive electrode active material layers 123 or the negative electrode active material layers 124 respectively formed on both surfaces of the resin film 121 has an advantage in increasing a battery capacity density per battery weight, and some other advantage. Additionally, the positive electrode sheet 101 and the negative electrode sheet 102 have projections (111, 112) for connection with external terminals, and the positive electrode active material layers 123 and the negative electrode active material layers 124 are not formed in these projections. Hence the conductive layers 122 are exposed and can thus be connected with the external terminals.

Further, as for the positive electrode sheet and the negative electrode sheet each using the resin film with the conductive layers 122 formed on both surfaces thereof, there are a variety of methods for electrically connecting the conductive layers 122 on the both surfaces.

For example, in Japanese Unexamined Patent Publication No. Hei 10(1998)-255754, a portion of the positive electrode sheet 101 or the negative electrode sheet 102, which is not provided with the positive electrode active material layers or the negative electrode active material layers, is clipped with a lead (131, 132) as shown in Fig. 6, and fixed by cold welding, ultrasonic welding, or the like, thereby to electrically connect the conductive layers 122 on both surfaces of the sheet.

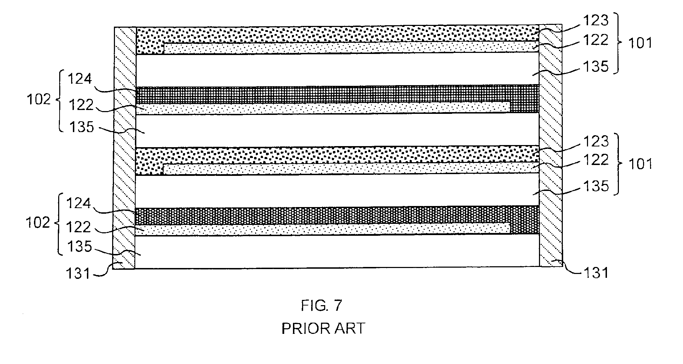

Further, for example, as described in Japanese Unexamined Patent Publication No. 2003-197198, the conductive layers 122 on both surfaces of the sheet can be electrically connected also by a method of depositing metal films (metallikon). Fig. 7 is a schematic sectional view of a secondary battery of Japanese Unexamined Patent Publication No. 2003-197198. It is to be noted that in the secondary battery of Fig. 7, an insulating resin film 135 functions as the above-mentioned resin film and separator. Specifically, as in Fig. 7, the conductive layers 122 in the positive electrode sheet 101 or the negative electrode sheet 102 constitute a part of each surface of the laminated sheets, and metal film (metallikon) 136 are deposited over the each surface, thereby to electrically connect the conductive layers 122.

However, there are following problems with the foregoing conventional techniques. In the case of connecting the electrode sheets by clipping with the leads as in Fig. 6, it is necessary to connect the lead to each of the electrode sheets, and further to mutually connect the plurality of leads. Therefore concerned is an increased cost due to the increased number of components as well as the increased number of processes for the connections.

Further, in the case of depositing the metal films (metallikon) as in Fig. 7, the metallikon technique is used, thereby necessitating pre-processing in forming the metal films, and hence longer lead time and an increased cost for materials are concerned. Moreover, the laminates such as the electrode sheets as objects to be thermally sprayed may be exposed to a high temperature.

### SUMMARY OF THE INVENTION

The present invention was made in view of such situations, and is to provide an electrode sheet capable of connecting conductive layers formed on both surfaces of a resin film at low cost.

An electrode sheet of the present invention is a positive electrode sheet formed by laminating a conductive layer and a positive electrode active material layer in this order on each surface of a resin film, or is a negative electrode sheet formed by laminating a conductive layer and a negative electrode active material layer in this order on each surface of a resin film, each of the positive and the negative electrode active material layers being partially provided to the conductive layer, wherein the electrode sheet has a partially folded section where the electrode sheet with the conductive layer but without the positive and the negative electrode active material layers is folded twice or more in the same direction, and the conductive layers provided on the both surfaces of the resin film are electrically connected with each other in the folded section.

The electrode sheet of the present invention is capable of electrically connecting the conductive layers formed on the both surfaces of the resin film at a low cost. Specifically, since the electrode sheet of the present invention is formed by laminating the conductive layer and the material layer in this order on the each surface of the resin film, it is necessary to electrically connect the conductive layers on the both surfaces of the resin film. For this reason, the electrode sheet of the present invention is partially the folded section where the electrode sheet with conductive layer but without the positive and the negative electrode active material layers is folded twice or more in the same direction. In this folded section, the conductive layers provided on the both surfaces of the resin film are electrically connected with each other.

Accordingly, in the electrode sheet of the present invention, since no particular component is required for connecting the conductive layers on the both surfaces, it is possible to manufacture the electrode sheet at a low cost, so as to reduce the manufacturing cost. Further, in the electrode sheet of the present invention, heating or the like is not necessary, thereby eliminating the exposure of the resin film and the like to a high temperature. Moreover, since this folded section can be easily joined to an external connection terminal by means of ultrasonic welding or the like, it is possible to reduce the manufacturing cost of a secondary battery using the electrode sheet of the present invention.

### BRIEF DESCRIPTION OF THE DRAWINGS

Fig. 1A is a schematic sectional view of a positive electrode sheet as an electrode sheet in accordance with an embodiment of the present invention;
Fig. 1B is a schematic view of a negative electrode sheet as an electrode sheet in accordance with an embodiment of the present invention;
Fig. 1C is an expanded view of a portion A surrounded by a dotted line in Fig. 1A;
Fig. 2A is a schematic plan view of a positive electrode sheet as an electrode sheet in accordance with an embodiment of the present invention (without a projection);
Fig. 2B is a schematic plan view of a positive electrode sheet as an electrode sheet in accordance with an embodiment of the present invention, with a folded section formed in a projection;
Fig. 3 is a schematic sectional view of a secondary battery in accordance with an embodiment of the present invention;
Fig. 4A is a schematic plan view of an internal structure of a secondary battery in accordance with an embodiment of the present invention, with folded sections overlapped;
Fig. 4B is a schematic sectional view of the overlapping of the folded sections when seen from a direction S in Fig. 4A.
Fig. 5 is a perspective view of an internal structure of a conventional stacked secondary battery;
Fig. 6 is a schematic sectional view of an internal structure of a conventional stacked secondary battery; and
Fig. 7 is a schematic sectional view of an internal structure of a conventional stacked secondary battery.

### DESCRIPTION OF PREFERRED EMBODIMENTS

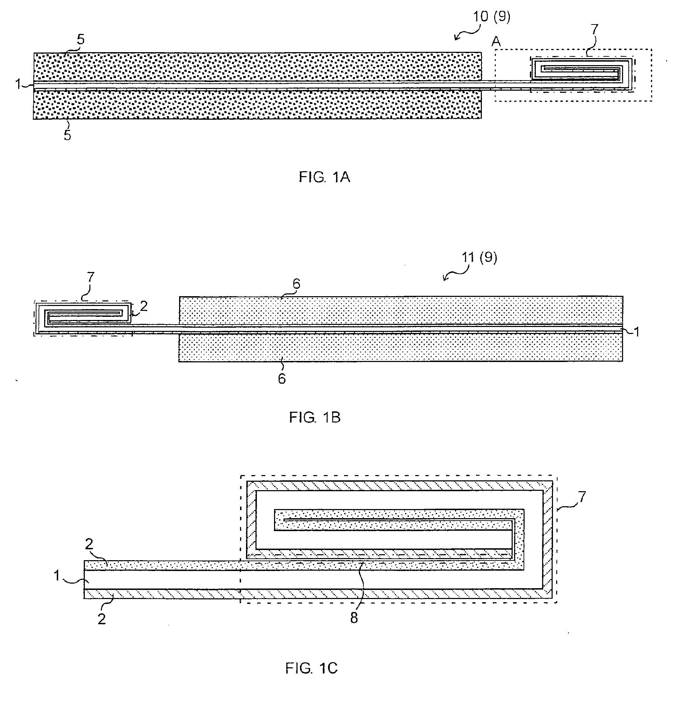

An electrode sheet of the present invention is capable of electrically connecting conductive layers formed on both surfaces of a resin film at a low cost. A specific description is given below. As shown in Figs. 1A and 1B, since an electrode sheet 9 of the present invention is formed by laminating the conductive layer 2 and the material layer 5, 6 in this order on each surface of a resin film 1, it is necessary to electrically connect the respective conductive layers 2 on the both surfaces of the resin film 1. For this reason, the electrode sheet 9 of the present invention is partially the folded section 7 where the electrode sheet with conductive layer but without the positive and the negative electrode active material layers is folded twice or more in the same direction. It is found from Fig. 1C showing the expanded view of this folded section 7 that the conductive layers 2 on the both surfaces of the resin film 1 are electrically connected with each other in a contact section 8, as indicated in a dashed line.

Therefore, in the electrode sheet 9 of the present invention, no particular component is required for connecting the conductive layers 2 on the both surfaces, thus making it possible to manufacture an electrode sheet at a low cost, so as to reduce the manufacturing cost. Further, in the electrode sheet of the present invention, heating or the like is not necessary, thereby eliminating the exposure of the resin film and the like to a high temperature. Moreover, since this folded section 7 can be easily joined to an external connection terminal by means of ultrasonic welding or the like, it is possible to reduce the manufacturing cost for a secondary battery using the electrode sheet of the present invention.

Furthermore, the present invention also provides a secondary battery having the electrode sheets of the present invention, and a method for manufacturing this secondary battery.

In the following, one embodiment of the present invention is described with reference to the drawings. Configurations shown in the drawings and the following descriptions are exemplary, and the scope of the present invention is not restricted to what are shown in the drawings and the following descriptions.

### 1. Electrode sheet

The electrode sheet 9 of the present embodiment is a positive electrode sheet 10 formed by laminating a conductive layer 2 and a positive electrode active material layer 5 in this order on each surface of a resin film 1, or is a negative electrode sheet 11 formed by laminating a conductive layer 2 and a negative electrode active material layer 6 in this order on each surface of a resin film, each of the positive and the negative electrode active material layers 5, 6 being partially provided to the conductive layer 2, wherein the electrode sheet 9 has a partially folded section 7 where the electrode sheet 9 with the conductive layer 2 but without the positive and the negative electrode active material layers 5, 6 is folded twice or more in the same direction, and the conductive layers 2 provided on the both surfaces of the resin film 1 are electrically connected with each other in the folded section 7.

It is to be noted that the electrode sheets 9 include the positive electrode sheet 10 and the negative electrode sheet 11. In addition, as for the positive electrode sheet 10 and the negative electrode sheet 11, different constitutional materials are used for the active material layers, but other than those, the same constitutional material can be used.

Moreover, the secondary battery using the electrode sheet 9 of the present embodiment is not restricted to one using the electrode sheets 9 of the present invention as both the positive electrode sheet 10 and the negative electrode sheet 11, but the electrode sheet 9 of the present invention may be used as either one of the positive electrode sheet 10 and the negative electrode sheet 11, and a conventional electrode sheet formed by providing a positive electrode active material or a negative electrode active material on both surfaces of a metal foil may be used as the other electrode sheet.

In the following, the electrode sheet of the present embodiment is described.

### 1-1. Positive electrode sheet

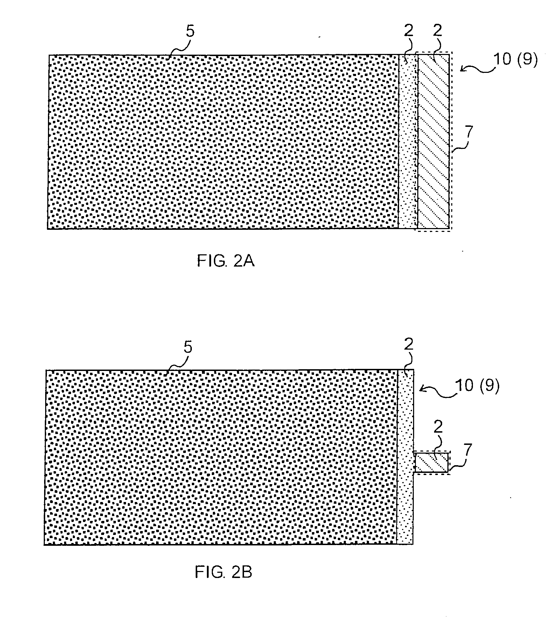

The positive electrode sheet 10 is the electrode sheet 9 formed by laminating the conductive layer 2 and the positive electrode active material layer 5 in this order on the each surface of the resin film 1, and has partially the folded section 7 where the electrode sheet 9 with the conductive layer but without the positive electrode active material layer 5 is folded twice or more in the same direction, and the conductive layers 2 provided on the both surfaces of the resin film 1 are electrically connected with each other in the folded section 7. Although the shape of the positive electrode sheet 10 is not particularly restricted, it may, for example, be rectangular. Further, as in Fig. 2B, a projection may be provided which is formed with the folded section 7 included in the positive electrode sheet 10.

### 1-2. Negative electrode sheet

The negative electrode sheet 11 is the electrode sheet 9 formed by laminating the conductive layers 2 and the negative electrode active material layers 6 in this order on the each surface of the resin film 1, and has partially the folded section 7 where the electrode sheet 9 with the conductive layer 2 but without the negative electrode active material layer 5 is folded twice or more in the same direction, and the conductive layers 2 provided on the both surfaces of the resin film 1 are electrically connected with each other in the folded section 7. Although the shape of the negative electrode sheet 11 is not particularly restricted, it may, for example, be rectangular. Further, as in Fig. 2B, a projection may be provided which is formed with the folded section 7 included in the negative electrode sheet 11.

### 1-3. Folded section

The folded section 7 is a portion formed by folding, twice or more in the same direction, a part of the electrode sheet 9 with the conductive layer 2 but without the positive and the negative electrode active material layers 5, 6. That is, the folded section 7 is a portion formed by folding the end of the electrode sheet 9 twice or more in the same direction as shown in Fig. 1C. As apparent from Fig. 1C, folding this end twice or more in the same direction causes electrical connection between the respective conductive layers 2 provided on the both surfaces of the resin film 1 in a portion 8 surrounded by the chain line in Fig. 1C.

It is thereby possible to electrically connect the respective conductive layers 2 on the both surfaces of the resin film 1 with a simple structure with no need for a particular component. Further, heating is not necessary, thereby eliminating the exposure of the electrode sheet 9 to a high temperature. Moreover, since this folded section 7 can be easily joined to an external connection terminal by means of ultrasonic welding or the like, it is possible to reduce the manufacturing cost for a secondary battery using the electrode sheet of the present invention.

The folded section 7 can be formed by folding, twice or more in the same direction, the end of the electrode sheet 9, which is provided with the conductive layers 2 and not provided with the positive electrode active material layers 5 and the negative electrode active material layers 6 on the both surfaces of the resin film 1. Further, welding can be performed so as to hold the folded shape. Moreover, in order to prevent cutting at a bent section of the folded section 7, a fixed space can be kept between a portion to be welded and the bent section.

Although the welding is not particularly restricted in the present specification, examples thereof include cold welding, ultrasonic welding, resistance welding, and laser welding. Among them, cold welding and ultrasonic welding are preferred, and ultrasonic welding is particularly preferred.

It is to be noted that, although Fig. 1 exemplifies the folded section 7 which is folded twice in the same direction, the present invention is not restricted to the case of folding twice, but includes the case of folding three times or more in the same direction, and the case of folding twice or more in the same direction and subsequently folding in a reverse direction.

Further, the folded section 7 without the positive and the negative electrode active material layers may have a thickness smaller than that of the positive electrode sheet 10 with the positive electrode active material layer 5 or of the negative electrode sheet 11 with the negative electrode active material layer 6. Thereby, in the case of making a secondary battery with use of the electrode sheet 9 and putting a laminate such as the electrode sheets 9 into a packaging material (case), it is possible to use a packaging material (case) made suitably for the thickness of the laminate so as to reduce the secondary battery in size. Further, it is also possible to reduce the manufacturing cost.

Moreover, the folded section 7 may be formed in a projection of the positive electrode sheet 10 or the negative electrode sheet 11. It should be noted that the projection is a projecting section provided at the end of the positive electrode sheet 10 or the negative electrode sheet 11 on the plane same as the sheet. For example, the projection is formed with the folded section 7 shown in Fig. 2B. Forming the folded section 7 in the projection can reduce the amount of a material used, so as to attempt reduction in weight. Further, the amount of welding can also be reduced.

### 1-4. Resin Film

The resin film 1 is not particularly restricted so long as allowing the conductive layers 2 and the material layer 5, 6 to be respectively provided in this order on the both surfaces thereof. Further, the respective resin films 1 in the positive electrode sheet 10 and the negative electrode sheet 11 may be made of the same material or different materials.

Although the material for the resin film 1 is not particularly restricted so long as being a resin film, examples thereof include polyethylene, casted polypropylene, polystyrene, polyethylene terephthalate, polyethylene naphthalate, polycarbonate, polyphenylene sulfide, biaxial oriented polypropylene, polyethersulfone, polyaramid, and polyimide. Among them, it is preferable to use a resin film made of polyethylene, casted polypropylene, polystyrene, or the like, which melts upon heat generation (e.g. the order of 150°C) due to a short circuit in an operating battery, since it is possible to obtain an effect of melting upon local heat generation due to an internal short-circuit and enabling shutdown of a short-circuit current.

Incidentally, since the resin film 1 is a supporting member of the conductive layers 2, use of a metal foil in place of the resin film 1 formed with the conductive layers 2 is considered. However, the use of the resin film 1 renders an advantage to allow shutdown of a short-circuit current upon an internal short circuit of a secondary battery. Further, since the electrode sheet can be reduced in weight, the use of the resin film renders an advantage to increase a capacity density per battery weight. Therefore, the electrode sheet 9 formed with the conductive layers 2 on the resin film is adopted in the present invention.

The thickness of the resin film 1 is preferably on the order of 5 to 25 µm, for example, so as to prevent the electrode sheet 9 from becoming excessively thick.

Although the shape of the resin film 1 is not particularly restricted, a quadrangular one can be used. Further, when the folded section 7 is to be formed in the projection as shown in Fig. 2B, the resin film 1 having such a projection can be used.

### 1-5. Conductive layer

The conductive layers 2 are provided on the both surfaces of the resin film 1, and are not particularly restricted so long as being electrically connected with the positive electrode active material layers 5 or the negative electrode active material layers 6.

Further, the conductive layer 2 may be formed over each of the both surfaces of the resin film 1.

Moreover, the conductive layer 2 preferably causes no chemical change in production of a secondary battery such as a lithium-ion secondary battery, a nickel metal-hydride storage battery or a nickel-cadmium storage battery.

In the following, as a specific example of the conductive layer 2, the conductive layer 2 of a lithium-ion secondary battery is specifically described.

As the material for the conductive layer 2 in the positive electrode sheet 10, for example, in addition to a stainless steel, nickel, aluminum, titanium and carbon, it is possible to use one obtained by treating the surface of aluminum or a stainless steel with carbon, nickel, titanium or silver. Especially, aluminum or an aluminum alloy is preferred. Further, these materials with the surfaces thereof oxidized may also be used.

As the material for the conductive layer 2 of the negative electrode sheet 11, for example, in addition to a stainless steel, nickel, copper, titanium, aluminum and carbon, it is possible to use one obtained by treating the surface of copper or a stainless steel with carbon, nickel, titanium or silver, and an A1-Cd alloy, or the like. Especially, copper or a copper alloy is preferred. Further, these materials with the surfaces thereof oxidized may also be used.

The conductive layer 2 can be formed over each of the both surfaces of the resin film 1 by an electroplating method or a vapor deposition method, and its thickness is preferably 0.5 to 10 µm, and more preferably on the order of 2 to 5 µm, in view of resistance in battery characteristics.

### 1-6. Positive electrode active material layer and negative electrode active material layer

The positive electrode active material layer 5 and the negative electrode active material layer 6 are not particularly restricted so long as being material layers related to an electromotive reaction of a battery including the positive electrode sheet 10 and the negative electrode sheet 11, and provided on the conductive layers 2 that is provided on each of the both surfaces of the resin films 1. Further, the positive electrode active material layer 5 and the negative electrode active material layer 6 are not formed over the entire conductive layer 2 provided on each of the both surfaces of the resin film 1, and the positive electrode sheet 10 or the negative electrode sheet 11 has an area of the end which is not formed with the positive electrode active material layers 5 and the negative electrode active material layers 6. Folding this area twice or more forms the folded section.

Further, for the positive electrode active material layer 5 and the negative electrode active material layer 6, a known material can be used which corresponds to a secondary battery intended to be produced, such as a lithium-ion secondary battery, a nickel metal-hydride storage battery or a nickel-cadmium storage battery.

Specifically described in the following is an active material layer of a lithium-ion secondary battery, as a typical example of the secondary battery of the present invention.

In the case of the lithium-ion secondary battery, an oxide containing lithium can be used as an active material for the positive electrode active material layer 5. For example, preferred is a composite oxide, sulfide, selenide or the like of lithium with titanium, molybdenum, copper, niobium, vanadium, manganese, chromium, nickel, iron, cobalt, phosphorus, or the like. More specifically, one or more of LiMnO₂ LiMn2O₄ LiNiO₂, LiCoO₂, LiCrO₂, LiFeO₂ LiVO₂ and LiMPO₄ (M is at least one element selected from Co, Ni, Mn and Fe) can be used singly or in combination of a plurality of them.

Further, as an active material for the negative electrode active material layer 6, at least one of graphite-based materials such as natural graphite, artificial graphite and highly crystal graphite, an amorphous carbon-based material, and metal oxides such as Nb₂O₅ and LiTiO₄ can be used singly or in combination of a plurality of them.

Moreover, as the materials for the positive electrode active material layer 5 and the negative electrode active material layer 6, in addition to the above active materials, it is possible to use a conductive agent, a thickening agent, a binder, a filler, a dispersing agent, an ion-conductive agent and a pressure enhancing agent, which are described later, or other variety of additives.

Applying a mixture of the active material and each of the variety of additives on each of the both surfaces of the resin film 1 formed with the conductive layers 2, and drying the mixture at a temperature which does not cause deformation or melting of the resin film 1 (e.g. the order of 100°C or lower) causes formation of the positive electrode active material layer 5 or the negative electrode active material layer 6. At this time, it is possible not to form the positive electrode active material layers 5 or the negative electrode active material layers 6 at the end of the electrode sheet where the folded section 7 is to be formed. This allows formation of the folded section in this end, so as to electrically connect the conductive layers 2 on the both surfaces of the resin film 1. Further, this end may be a projection on the plane same as the positive electrode sheet 10 or the negative electrode sheet 11. This allows formation of the folded section 7 in the projection.

It is to be noted that in the battery assembly, outermost active material layers of the electrode sheets located at both ends in a laminating direction may not be provided.

The thickness of the positive electrode active material layer 5 or the negative electrode active material layer 6 may be, for example, appropriately on the order of 20 to 150 µm, and preferably on the order of 50 to 100 µm.

The conductive agent is not particularly restricted so long as an electronic conductive material which is generally in use as a battery material and does not cause a chemical change in a constituted battery. For example, a graphite such as a natural graphite (scaly graphite, flake graphite, earthy graphite, etc.) or an artificial graphite; a carbon black such as acetylene black, ketchen black, channel black, furnace black, lamp black or thermal black; a conductive fiber such as a vapor growth carbon fiber (VGCF), a carbon fiber or a metal fiber; a metal powder such as a copper powder, a nickel powder, an aluminum powder or a silver powder; a conductive whisker such as zinc oxide or potassium titanate; a conductive metal oxide such as titanium oxide; or a conductive organic material such as a polyphenylene derivative may be used singly or as a mixture thereof. Among these conductive agents, acetylene black, VGCF, and simultaneous use of graphite and acetylene black are particularly preferred.

As the thickening agent, preferred is a medicine, addition of which in a small amount renders a liquid of a high viscosity. For example, usable is one or more selected from celluloses such as carboxymethyl cellulose (CMC), methyl cellulose, ethyl cellulose, hydroxymethyl cellulose, hydroxypropyl methyl cellulose, and hydroxyethyl methyl cellulose; a polycarboxylic acid-based compound such as polyacrylate and sodium polyacrylate; a compound having a structure of vinyl pyrrolidone such as polyvinyl pyrrolidone; polyacrylamide, polyethylene oxide, polyvinyl alcohol, sodium alginate, xanthan gum, carrageenan, guar gum, gelatin, starch, and the like. Among them, a carboxymethyl cellulose salt is preferred.

When the thickening agent is the carboxymethyl cellulose salt, an etherification degree is preferably 0.3 to 2.0, and particularly preferably 0.45 to 1, in view of solubility to water, preservation stability, the manufacturing cost, and the like.

As the binder, usable is one which is generally in use as a battery material, as well as can be used as one or a mixture of polysaccharides, thermoplastic resins and polymers having rubber elasticity. Preferable examples of the binder include starch, polyvinyl alcohol, carboxymethyl cellulose, hydroxypropyl methyl cellulose, regenerated cellulose, diacetyl cellulose, polyvinylchloride, polyvinylpyrrolidone, polytetrafluoroethylene, polyvinylidene fluoride, polyethylene, polypropylene, ethylene-propylene-diene terpolymer (EPDM), sulfonated EPDM, styrene butadiene rubber, polybutadiene, fluorine rubber, and polyethylene oxide.

The filler is not particularly restricted so long as a fibrous material which is generally in use as a battery material and does not cause a chemical change in a constituted lithium secondary battery. For example, a fiber of an olefin-type polymer such as polypropylene or polyethylene, glass, carbon or the like can be used.

The ion conductive agent is generally known as an inorganic or organic solid electrolyte. For example, usable is a polyethylene oxide derivative, a polymer including the same derivative, a polypropylene oxide derivative, a polymer including the same derivative, a phosphate ester polymer, or the like.

The pressure emphasizing agent is a compound used for increasing an internal pressure of a battery, and carbonate or the like can be used.

### 2. Secondary battery

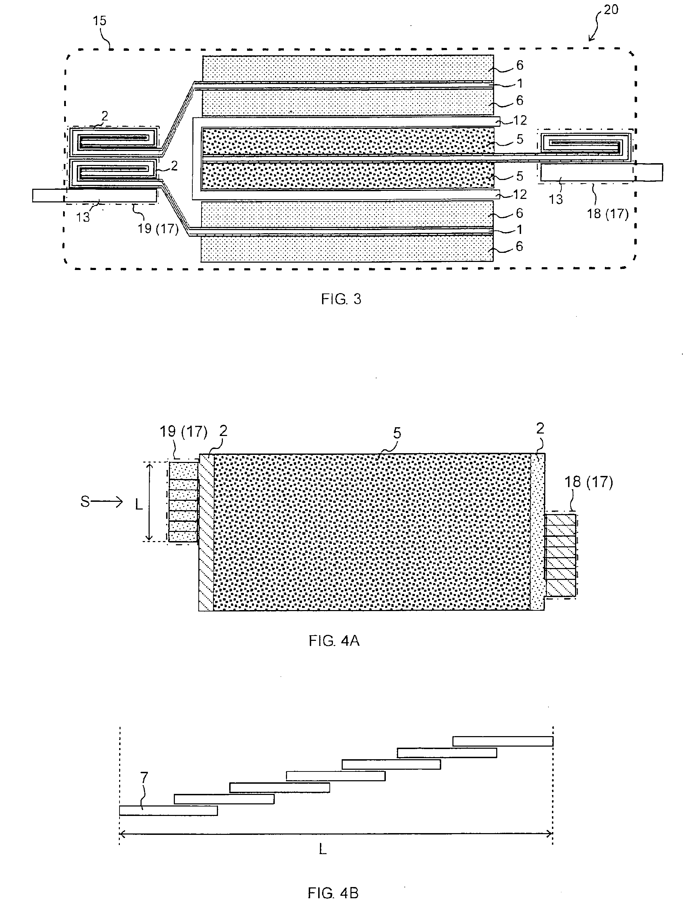

Fig. 3 is a schematic sectional view of a secondary battery in accordance with an embodiment of the present invention.

In a secondary battery 20 of the present embodiment, the positive electrode sheet 10, as the electrode sheet 9 of the present invention, formed by providing the conductive layer 2 and the positive electrode active material layer 5 in this order on the each surface of the resin film 1, and the negative electrode sheet 11, as the electrode sheet 9 of the present invention, formed by providing the conductive layer 2 and the negative electrode active material layer 6 in this order on the each surface of the resin film 1, are provided with a separator 12 interposed therebetween and packaged with a packaging material 15 together with an electrolyte. Further, the folded section 7 of the positive electrode sheet 10 and the folded section 7 of the negative electrode sheet 11 may be electrically connected respectively to different connection terminals 13.

Further, a method for manufacturing the secondary battery 20 of the present embodiment includes the steps of: laminating a conductive layer 2 and a positive electrode active material layer 5 in this order on each surface of a resin film 1, the positive electrode active material layer 5 being partially provided to the conductive layer 2; partially folding, twice or more in the same direction, the resin film 1 with the conductive layer 2 but without the positive electrode active material layer 5 so that a positive electrode sheet 10 is formed, in which the conductive layers 2 provided on the both surfaces of the resin film 1 are electrically connected with each other; laminating a conductive layer 2 and a negative electrode active material layer 6 in this order on each surface of a resin film 1, the negative electrode active material layer 6 being partially provided to the conductive layer 2; partially folding, twice or more in the same direction, the resin film 1 with the conductive layer 2 but without the negative electrode active material layer 6 so that a negative electrode sheet 11 is formed, in which the conductive layers 2 provided on the both surfaces of the resin film 1 are electrically connected with each other; interposing a separator 12 between the positive electrode sheet 10 and the negative electrode sheet 11; and packaging, with a packaging material 15, the positive and the negative electrode sheets 10, 11 and the separator 12 together with an electrolyte.

In the following, the secondary battery 20 of the present embodiment is described.

The secondary battery 20 of the present invention is applicable to secondary batteries such as a lithium-ion secondary battery, a nickel metal-hydride storage battery and a nickel-cadmium storage battery, which have the above-mentioned structure. Further, the secondary battery of the present invention may have a laminated structure or a wound structure.

### 2-1. Positive electrode sheet and negative electrode sheet

As the positive electrode sheet 10 and the negative electrode sheet 11, the electrode sheets described in "1." to "1-6." can be used. The positive electrode sheet 10 and the negative electrode sheet 11 are provided with the separator 12 interposed therebetween. Moreover, an area formed with the positive electrode active material layers 5 of the positive electrode sheet 10 and an area formed with the negative electrode active material layers 6 of the negative electrode sheet 11 may be a same shape.

Further, at least either the positive electrode sheet 10 or the negative electrode sheet 11 is provided plural in number, and the positive electrode sheet 10 and the negative electrode sheet 11 may be alternately arranged. This structure can increase a battery capacity. Although not particularly restricted, the total number of the positive electrode sheets 10 and the negative electrode sheets 11 is, for example, 3 to 50, and is preferably 5 to 20.

Moreover, the folded sections 7 of the positive electrode sheet 10 and the negative electrode sheet 11 may be arranged so as not to be overlapped with each other. This structure can prevent contact between the folded section 7 of the positive electrode sheet 10 and the folded section 7 of the negative electrode sheet 11, thereby preventing a leak current. For example, as shown in Fig. 3, the folded sections 7 of the positive electrode sheet 10 and the negative electrode sheet 11 can be arranged on sides opposed to each other so that the folded sections 7 are not overlapped with each other.

Furthermore, in the case of laminating a plurality of positive electrode sheets 10 or negative electrode sheets 11, the positive electrode sheets 10 or the negative electrode sheets 11 can be arranged such that the respective folded sections 7 of the positive electrode sheet 10 or the negative electrode sheet 11 are overlapped with one another. This structure can electrically connect the conductive layers 2 of the plurality of positive electrode sheets 10 or the conductive layers 2 of the plurality of negative electrode sheets 11. For example, as shown in Fig. 3, the plurality of negative electrode sheets 11 can be arranged such that the folded sections are overlapped with one another.

Additionally, the folded section 7 of the positive electrode sheet 10 and the folded section 7 of the negative electrode sheet 11 can be electrically connected respectively to the different connection terminals 13. This structure allows external utilization of an electromotive force generated between the positive electrode sheet 10 and the negative electrode sheet 11.

Further, the plurality of folded sections 7, or the plurality of folded sections 7 and the connection terminal 13 can be overlapped and welded so as to be joined together. It is to be noted that a welded section 17 corresponds to this overlapped and welded portion. In addition, the welded section may be formed by welding the connection terminal 13 and the folded sections 7 together or welding only the plurality of folded sections 7. Moreover, a positive electrode welded section 18 corresponds to a portion formed by overlapping and welding the folded sections 7 of the positive electrode sheets 10, and a negative electrode welded section 19 corresponds to a portion formed by overlapping and welding the folded sections 7 of the negative electrode sheets 11. Furthermore, the positive electrode welded section 18 and the negative electrode welded section 19 may correspond to portions each formed by overlapping and welding the folded sections 7 and the connection terminal 13.

Although not particularly restricted, the welding method is, for example, ultrasonic welding.

Further, the connection terminal 13 is not particularly restricted so long as being made of a conductive material and allowing the external use of an electromotive force of a battery including the positive electrode sheet 10 and the negative electrode sheet 11.

Moreover, the welded section 17 may have not less than three folded sections 7, and a first folded section may be overlapped with part of an adjacent second folded section, and the second folded section of a portion not overlapped with the first folded section may be overlapped with an adjacent third folded section. The welded section 17 forming in this configuration can electrically connect the conductive layers 2 of each of the positive electrode sheets or each of the negative electrode sheets, and further facilitates direct connection of the folded section 7 of each of the positive electrode sheets or each of the negative electrode sheets to the connection terminal 13, thereby allowing stable connection. This example is described with reference to the drawings. Fig. 4A is a schematic plan view of a secondary battery in accordance with an embodiment of the present invention, and Fig. 4B is a schematic sectional view of the welded section 17 seen from a direction of an arrow S in Fig. 4A. It should be noted that in the embodiment of Figs. 4A and 4B, a secondary battery is configured with seven positive electrode sheets 10 and seven negative electrode sheets 11 which are provided with the separators 12 interposed therebetween. Each of The positive electrode sheets or each of the negative electrode sheets has a projection formed with the folded section 7. As shown in Figs. 4A and 4B, the welded section 17 can be formed so as not to have a portion where not less than three folded sections 7 are overlapped with one another. Overlapping the folded sections 7 in this manner and welding them to the connection terminal 13 can electrically connect the respective folded sections 7 and weld the respective folded sections 7 directly to the connection terminal 13.

### 2-2. Separator

The separator 12 is not particularly restricted so long as being able to prevent electrical contact between the positive electrode sheet 10 and the negative electrode sheet 11 and being electrolyte-permeable.

As the separator 12, for example, a micro-porous film made of an olefin-based resin such as polyethylene, polypropylene or polyether can be used singly or in combination, and according to need, a low-priced separator such as a nonwoven fabric can also be used. Further, use of a separator excellent in thermal resistance, such as an aramid resin, can preferably improve safety.

Further, the thickness of the separator 12 is, for example, appropriately on the order of 5 to 100 µm, and preferably on the order of 10 to 30 µm. Moreover, the porosity of the separator 12 is, for example, appropriately on the order of 30 to 90%, and preferably on the order of 40 to 80%. It is to be noted that, when the thickness is smaller than 5 µm, the mechanical strength of the separator 12 becomes insufficient to unpreferably cause an internal short circuit of the battery, and when the thickness is larger than 100 µm, the distance between the positive electrode sheet 10 and the negative electrode sheet 11 becomes long to unpreferably increase the internal resistance of the battery. Moreover, when the porosity is lower than 30%, a content of the electrolyte decreases to unpreferably increase the internal resistance of the battery, and when the porosity is higher than 90%, the positive electrode sheet 10 and the negative electrode sheet 11 come into physical contact to unpreferably cause an internal short circuit of the battery. In this case, the thickness and the porosity of the separator 12 respectively mean the thickness measured with a micrometer, and a value measured from a ratio of the density of the separator, which is calculated by measuring the thickness with the micrometer and the weight with an electronic scale, to a true density of the resin of the separator.

Furthermore, the separator 12 may have a softening temperature higher than that of the resin film 1. It is preferable that the softening temperature of the separator 12 be higher than that of the resin film 1 since, when an internal short circuit occurs due to mixture of a foreign material or the like inside the battery and an abnormal current flows inside the battery to abnormally generate heat, the resin film 1 melts down to block passage of the current, thereby allowing prevention of an internal short circuit portion of the battery from being expanded.

### 2-3. Packaging material

The packaging material 15 is not particularly restricted so long as being capable of packaging the positive electrode sheet 10 and the negative electrode sheet 11 provided with the separator 12 interposed therebetween together with the electrolyte. The packaging material 15 can be sealed.

As the packaging material 15 (battery case), a can body made of, for example, iron, a stainless steel, aluminum, nickel-plated iron, or the like can be used, or one obtained by forming a film of a resin-laminated aluminum foil into a square tube shape or a thin flat tube shape can also be used. It is to be noted that in the case of using a conductive material such as the can body as the packaging material, an insulating material can be placed between the positive electrode sheet and the negative electrode sheet for preventing the positive electrode sheet and the negative electrode sheet from generating a short-circuit current.

### 2-4. Electrolyte

The electrolyte is not particularly restricted so long as containing ions capable of bringing about battery reactions with the positive electrode active material layer 5 and the negative electrode active material layer 6.

As the electrolyte, a known material is used which corresponds to a secondary battery intended to be produced, such as a lithium-ion secondary battery, a nickel metal-hydride storage battery or a nickel-cadmium storage battery.

In the following, an electrolyte of the lithium-ion secondary battery as a typical example of the secondary battery of the present invention is specifically described.

As the electrolyte, for example, a non-aqueous electrolyte containing a lithium salt is used.

Further, examples of the lithium salt for use in the lithium-ion secondary battery include lithium borofluoride (LiBF₄), lithium hexafluorophosphate (LiPF₆), trifluoromethanesulfonate (LiCF₃SO₃), trifluoroacetic acid lithium (LiCF₃COO), and lithium bis (trifluoromethanesulfonyl) imide (LiN(CF₃SO₂)₂), which can be used singly or in mixture of two or more of them. A suitable concentration of the salt of the non-aqueous electrolyte is, for example, 0.5 to 3 mol/L.

Moreover, in place of the non-aqueous electrolyte, a gel electrolyte which holds the electrolyte in a polymer matrix, or the like, can also be used. As the polymer matrix, suitable is one with a copolymer of polyethylene oxide and polypropylene oxide taken as a fundamental structure, with cross-linking of a compound having multifunctional acrylate at the end. This is because, with a strong cross-linking structure formed as compared with that of a physical cross-linking gel, there is little exudation of the non-aqueous electrolyte from the gel, or the like, thereby increasing reliability of the battery.

Examples of a solvent for the non-aqueous electrolyte include cyclic carbonates such as propylene carbonate (PC), ethylene carbonate (EC) and butylene carbonate; chain carbonates such as dimethyl carbonate (DMC), diethyl carbonate (DEC), ethyl methyl carbonate (EMC) and dipropyl carbonate; lactones such as γ-butyrolactone (hereinafter occasionally abbreviated as GBL) and γ- valerolactone; furans such as tetrahydrofuran and 2-methyltetrahydrofuran; ethers such as diethyl ether, 1,2-dimethoxyethane, 1,2-diethoxyethane, ethoxy methoxyethane and dioxane; dimethylsulfoxide, sulfolane, methyl sulfolane, acetonitrile, methyl formate, and methyl acetate. These can be used singly or in combination of two or more of them. In particular, γ-butyrolactone (GBL) is preferably contained.

Further, for the purpose of improving safety, an ionic liquid can also be used. Moreover, for the purpose of forming a favorable film on an electrode and improving stability of charging/ discharging, vinylene carbonate (VC) or cyclohexylbenzene (CHB) can also be added.

### 3. Effect demonstration test

### 3-1. First secondary battery production test

A lithium-ion battery with a laminated structure having an internal structure as shown in Fig. 3 was produced.

### 3-1-1. Production of positive electrode sheet

First, Al as the conductive layers 2 was respectively deposited over both surfaces of a polypropylene film as the resin film 1, having a thickness of 20 µm and dimensions of 160 mm × 70 mm, to form conductive layers 2 having a thickness of 2 µm. Subsequently, as in Fig 2A, on both surfaces of a portion other than an end to be formed with a folded section of the resin film having the conductive layers 2, positive electrode active material layers 5 each having a thickness of about 80 µm were formed into rectangular shape by an application method. It is to be noted that each of the positive electrode active material layers 5 was formed by applying olivine-type lithium-ion phosphate as a positive electrode active material added with a conductive agent, a binder and a thickening agent. Thereafter, the portion not formed with the positive electrode active material layers 5 was folded twice in the same direction with a width of 5 mm, and the conductive layers 2 on the both surfaces of the resin film 1 were electrically connected with each other and fixed by ultrasonic welding. It should be noted that, in the ultrasonic welding in this effect demonstration test, "ULTRASONIC WELDER ATP-2020E" manufactured by AmTech was used, and an amplitude was set to 36 µm, a pressure to 400 k, and time to 0.4 s.

### 3-1-2. Production of negative electrode sheet

Next, Cu as the conductive layers 2 was respectively deposited over both surfaces of a polypropylene film as the resin film 1, having a thickness of 20 µm and dimensions of 169 mm × 78 mm, to form conductive layers 2 having a thickness of 2 µm. Subsequently, as shown in Fig 2A, on both surfaces of a portion other than an end to be formed with a folded section of the resin film 1 having the conductive layers 2, negative electrode active material layers each having a thickness of about 70 µm were formed by the application method. It is to be noted that each of the negative electrode active material layers 6 was formed by applying natural graphite as a negative electrode active material added with a conductive agent, a binder and a thickening agent. In addition, an area formed with the positive electrode active material layers 5 and an area formed with the negative electrode active material layers 6 were formed so as to have almost the same shape when laminated. Thereafter, the portion not formed with the negative electrode active material layers 6 was folded twice in the same direction with a width of 5 mm, and the conductive layers 2 on the both surfaces of the resin film 1 were electrically connected with each other and fixed by ultrasonic welding. Further, another negative electrode sheet having the identical shape was formed in the same manner.

### 3-1-3. Production of power generation element

Next, as shown in Fig. 3, the positive electrode sheet 10 and the negative electrode sheets 11 were laminated such that both surfaces of the one positive electrode sheet 10 were adjacent respectively to the negative electrode sheets 11 with the separators 12 therebetween. Further, as in Fig. 3, the positive electrode sheet 10 and the negative electrode sheets 11 were laminated such that the area of the positive electrode sheet 10 formed with the positive electrode active material layers 5 and the areas of the negative electrode sheets 11 formed with the negative electrode active material layers 6 were overlapped with each other, as well as such that the folded section 7 of the positive electrode sheet 10 and the folded sections 7 of the negative electrode sheets 11 were arranged opposite to each other. In addition, the separators 12 prevent the positive electrode sheets 10 and the negative electrode sheets 11 from coming into electrical contact with each other. Further, as the separator 12, a polypropylene porous film having a thickness of 25 µm, a porosity of 50% and dimensions of 138 mm × 78 mm was used. Subsequently, as shown in Fig. 3, the two separators 12 between the positive electrode sheet 10 and the negative electrode sheets 11 were thermally welded on the side opposite to the folded section 7 of the positive electrode sheet 10 such that the positive electrode sheet 10 was placed therebetween. A short-circuit current was thereby prevented from flowing between the end of the positive electrode sheet 10 and the conductive layers 2 of the negative electrode sheets 11. Thereafter, the folded section 7 of the positive electrode sheet 10 was overlapped with the connection terminal 13 for the positive electrode and ultrasonic-welded. Further, the respective folded sections 7 of the two negative electrode sheets 11 were overlapped with each other and ultra-sonic welded to the connection terminal 13 for the negative electrode. There was thus obtained a power generation element.

### 3-1-4. Production of secondary battery

The obtained power generation element was put into an aluminum can serving as the packaging material 15, and 25 g of an electrolyte, which was prepared by dissolving LiPF₆ into a mixed solvent of ethylene carbonate (EC) and diethyl carbonate (DEC) (EC:DEC = 30:70 (volume ratio)) so as to be 1 mol/L, was injected and a lid with a safety valve was laser-welded to obtain a lithium-ion secondary battery. The battery had a size of 180 mm × 80 mm and a thickness of 5 mm.

Further, four secondary batteries of the same structure were produced, to obtain a total of five secondary batteries.

### 3-1-5. Measurement of secondary battery capacity

The five lithium-ion secondary batteries thus produced were charged/discharged under the following conditions for measuring battery capacities, to find the battery capacities to be 0.4 Ah, which is 95 to 98% of a theoretical value. It was found therefrom that all of the positive electrode sheets and the negative electrode sheets in the secondary batteries were electrically connected respectively to the connection terminals 13 for the positive/negative electrodes.

Conditions for charging were in CC / CV with a final voltage of 4.2 V, a rate of 0.1 C, and completion at 0.1 A; while conditions for discharging were in CC with a final voltage of 3.0 V, and a rate of 0.1 C, and the number of times of charging/ discharging was 20.

### 3-2. Second secondary battery production test

A lithium-ion battery having a laminated structure with the folded section 7 of the negative electrode sheet 11 formed in a projection was produced.

It is to be noted that the description of the first secondary battery production test in "3-1" also applies to the second secondary battery production test so long as being consistent with the following description.

### 3-2-1. Production of positive electrode sheet

A total of nine positive electrode sheets having the same structure were produced in the same manner as described in "3-1-1". The folded section 7 of the positive electrode sheet 10 was produced as shown in Fig. 2A.

### 3-2-2. Production of negative electrode sheet

A total of ten negative electrode sheets 11 having the same structure were produced in the same manner as described in "3-1-2" except that the folded sections 7 were formed in productions as shown in Fig. 2B.

It should be noted that, as the resin film 1 for use in the negative electrode sheet 11, one having a production that can be formed with the folded section 7 was used. Further, the folded section 7 was formed by folding the production formed with the conductive layers 2 twice or more in the same direction.

### 3-2-3. Production of power generation element

A power generation element was produced in the same manner as described in "3-1-3" except that the nine positive electrode sheets 10 and the ten negative electrode sheets 11 with the folded sections 7 formed in the productions were used.

The nine positive electrode sheets 10 and the ten negative electrode sheets 11 were laminated with the separators 12 therebetween. Subsequently, the folded sections 7 of the respective positive electrode sheets 10 were overlapped with one another and ultrasonic-welded to the connection terminal 13 for the positive electrode. Further, the folded sections 7 of the negative electrode sheets 11, which are formed in the projections, were overlapped with one another and ultrasonic-welded to the connection terminal 13 for the negative electrode. There was thus obtained the power generation element.

### 3-2-4. Production of secondary battery

The obtained power generation element was put into an aluminum can serving as the packaging material 15, and 25 g of an electrolyte, which was prepared by dissolving LiPF₆ into a mixed solvent of ethylene carbonate (EC) and diethyl carbonate (DEC) (EC:DEC = 30:70 (volume ratio)) so as to be 1 mol/L, was injected and a lid with a safety valve was laser-welded to obtain a lithium-ion secondary battery. The battery had a size of 180 mm × 80 mm and a thickness of 5 mm.

Further, four secondary batteries of the same structure were produced, to obtain a total of five secondary batteries.

### 3-2-5. Measurement of secondary battery capacity

The five lithium-ion secondary batteries thus produced were charged/discharged under the following conditions for measuring battery capacities, to find the battery capacities to be 4 Ah, which is 95 to 98% of a theoretical value. It was found therefrom that all of the positive electrode sheets 10 and the negative electrode sheets 11 in the secondary batteries were electrically connected respectively to the connection terminals 13 for the positive/negative electrodes.

Conditions for charging were in CC/CV with a final voltage of 4.2 V, a rate of 0.1 C, and completion at 0.1 A; while conditions for discharging were in CC with a final voltage of 3.0 V and a rate of 0.1 C, and the number of times of charging/discharging was 20.

### 3-3. Third secondary battery production test

A lithium-ion battery having a laminated structure with the folded section 7 of the positive electrode sheet 10 formed in a projection was produced.

It is to be noted that the description of the first secondary battery production test in "3-1" also applies to the third secondary battery production test so long as being consistent with the following description.

### 3-3-1. Production of positive electrode sheet

A total of nine positive electrode sheets 10 having the same structure were produced in the same manner as described in "3-1-1" except that the folded section 7 was formed in a projection as shown in Fig. 2B.

It should be noted that, as the resin film 1 for use in the positive electrode sheet 10, one having a projection that can be formed with the folded section 7 was used. Further, the folded section 7 was formed by folding the projection having the conductive layers 2 twice or more in the same direction.

### 3-3-2. Production of negative electrode sheet

A total of ten negative electrode sheets 11 having the same structure were produced in the same manner as described in "3-1-2". The folded section 7 of the negative electrode sheet 11 was produced as shown in Fig. 2A.

### 3-3-3. Production of power generation element

A power generation element was produced in the same manner as described in "3-1-3" except that the nine positive electrode sheets 10 with the folded sections 7 formed in the projections and the ten negative electrode sheets 11 were used.

The nine positive electrode sheets 10 and the ten negative electrode sheets 11 were laminated with one another with the separators 12 therebetween. Subsequently, the folded sections 7 of the respective positive electrode sheets 10, which are formed in the projections, were overlapped with one another and ultrasonic-welded to the connection terminal 13 for the positive electrode. Further, the folded sections 7 of the negative electrode sheets 11 were overlapped with one another and ultrasonic-welded to the connection terminal 13 for the negative electrode. There was thus obtained the power generation element.

### 3-3-4. Production of secondary battery

The power generation element thus obtained was put into an aluminum can serving as the packaging material 15, and 25 g of an electrolyte, which was prepared by dissolving LiPF₆ into a mixed solvent of ethylene carbonate (EC) and diethyl carbonate (DEC) (EC:DEC = 30:70 (volume ratio)) so as to be 1 mol/L, was injected and a lid with a safety valve was laser-welded to obtain a lithium-ion secondary battery. The battery had a size of 180 mm × 80 mm and a thickness of 5 mm.

Further, four secondary batteries of the same structure were produced, to obtain a total of five secondary batteries.

### 3-3-5. Measurement of secondary battery capacity

The five lithium-ion secondary batteries thus produced were charged/discharged under the following conditions for measuring battery capacities, to find the battery capacities to be 4 Ah, which is 95 to 98% of a theoretical value. It was found therefrom that all of the positive electrode sheets 10 and the negative electrode sheets 11 in the secondary batteries were electrically connected respectively to the connection terminals 13 for the positive/negative electrodes.

Conditions for charging were a in CC/CV with a final voltage of 4.2 V, a rate of 0.1 C, and completion at 0.1 A; while conditions for discharging were in CC with a final voltage of 3.0 V and a rate of 0.1 C, and the number of times of charging/ discharging was 20.

### 3-4. Fourth secondary battery production test

A lithium-ion battery having a wound structure was produced.

It is to be noted that the description of the first secondary battery production test in "3-1" also applies to the fourth secondary battery production test so long as being consistent with the following description.

### 3-4-1. Production of positive electrode sheet

The positive electrode sheet 10 was produced in the same manner as described in "3-1-1". It should be noted that the folded section 7 of the positive electrode sheet 10 was produced as shown in Fig. 2A. Further, as the resin film 1 of the positive electrode sheet 10, one having dimensions of 1430 mm × 70 mm was used.

### 3-4-2. Production of negative electrode sheet

The negative electrode sheet 11 was produced in the same manner as described in "3-1-2". It should be noted that the folded section 7 of the negative electrode sheet 11 was produced as shown in Fig. 2A. Further, as the resin film 1 of the negative electrode sheet 11, one having dimensions of 1440 mm × 72 mm was used.

### 3-4-3. Production of power generation element

Next, the positive electrode sheet 10 and the negative electrode sheet 11 were laminated with the separator 12 therebetween, and another separator 12 was overlapped so as to place the positive electrode sheet 10 between the separators 12. This laminate was wound to produce a power generation element. It is to be noted that as the separator 12, one having dimensions of 1440 mm × 78 mm was used.

### 3-4-4. Production of secondary battery

The power generation element thus obtained was put into an aluminum can serving as the packaging material 15, and 30 g of an electrolyte, which was prepared by dissolving LiPF₆ into a mixed solvent of ethylene carbonate (EC) and diethyl carbonate (DEC) (EC:DEC = 30:70 (volume ratio)) so as to be 1 mol/L, was injected and a lid with a safety valve was laser-welded to obtain a lithium-ion secondary battery. The battery had a size of 85 mm × 50 mm and a thickness of 25 mm.

Further, four secondary batteries of the same structure were produced to obtain a total of five secondary batteries.

### 3-4-5. Measurement of secondary battery capacity

The five lithium-ion secondary batteries thus produced were charged discharged under the following conditions for measuring battery capacities, to find the battery capacities to be 4 Ah, which is 95 to 98% of a theoretical value. It was found therefrom that all of the positive electrode sheets 10 and the negative electrode sheets 11 in the secondary batteries were electrically connected respectively to the connection terminals for the positive/negative electrodes.

Conditions for charging were in CC/CV with a final voltage of 4.2 V, a rate of 0.1 C, and completion at 0.1 A; while conditions for discharging were in CC with a final voltage of 3.0 V and a rate of 0.1 C, and the number of times of charging/ discharging was 20.

### 3-5. Fifth secondary battery production test

A lithium-ion battery having a laminated structure with the folded sections 7 of the positive electrode sheet 10 and the negative electrode sheet 11 formed in projections was produced.

It is to be noted that the description of the first secondary battery production test in "3-1" also applies to a fifth secondary battery production test so long as being consistent with the following description.

### 3-5-1. Production of positive electrode sheet

A total of five positive electrode sheets 10 having the same structure were produced in the same manner as described in "3-1-1" except that the folded section 7 was formed in a projection as shown in Fig. 2B and that the projections were arranged as shown in Figs. 4A and 4B.

It should be noted that, as the resin film 1 for use in the positive electrode sheet 10, one having a projection that can be formed with the folded section 7 was used. As the projections, used were ones in such a positional relationship that the adjacent projections were overlapped with each other but three projections were not overlapped with one another. Further, the folded section 7 was formed by folding the projection formed with the conductive layers 2 twice or more in the same direction.

### 3-5-2. Production of negative electrode sheet

A total of six negative electrode sheets 11 having the same structure were produced in the same manner as described in "3-1-2" except that the folded section 7 was formed in a projection as shown in Fig. 2B and that the projections were arranged as shown in Figs. 4A and 4B.

It should be noted that, as the resin film 1 for use in the negative electrode sheet 11, one having a projection that can be formed with the folded section 7 was used. As the projections, used were ones in such a positional relationship that the adjacent projections were overlapped with each other but three projections were not overlapped with one another. Further, the folded section 7 was formed by folding the projection formed with the conductive layers 2 twice or more in the same direction.

### 3-5-3. Production of power generation element

A power generation element was produced in the same manner as described in "3-1-3" except that the five positive electrode sheets 10 and the six negative electrodes 11 with the folded sections 7 formed in the projections were used, and that the folded sections 7 of the positive electrode sheets 10 and the negative electrode sheets 11 were overlapped with one another as shown in Figs. 4A and 4B.

The five positive electrode sheets 10 and the six negative electrode sheets 11 were laminated with one another with the separators 12 therebetween. Subsequently, the folded sections 7 of the respective positive electrode sheets 10, which are formed in the projections, were overlapped with one another as in Figs. 4A and 4B and ultrasonic-welded to the connection terminal 13 for the positive electrode. Further, the folded sections 7 of the respective negative electrode sheets 11 were overlapped with one another as in Figs. 4A and 4B and ultrasonic-welded to the connection terminal 13 for the negative electrode. There was thus obtained the power generation element.

### 3-5-4. Production of secondary battery

The obtained power generation element was put into an aluminum can serving as the packaging material 15, and 25 g of an electrolyte, which was prepared by dissolving LiPF₆ into a mixed solvent of ethylene carbonate (EC) and diethyl carbonate (DEC) (EC:DEC = 30:70 (volume ratio)) so as to be 1 mol/L, was injected and a lid with a safety valve was laser-welded to obtain a lithium-ion secondary battery. The battery had a size of 180 mm × 80 mm and a thickness of 5 mm.

Further, four secondary batteries of the same structure were produced to obtain a total of five secondary batteries.

### 3-5-5. Measurement of secondary battery capacity

The five lithium-ion secondary batteries thus produced were charged/discharged under the following conditions for measuring battery capacities, to find the battery capacities to be 2 Ah, which is 95 to 98% of a theoretical value. It was found therefrom that all of the positive electrode sheets 10 and the negative electrode sheets 11 in the secondary batteries were electrically connected respectively to the connection terminals 13 for the positive/negative electrodes.

Conditions for charging were in CC/CV with a final voltage of 4.2 V, a rate of 0.1 C, and completion at 0.1 A; while conditions for discharging were in CC with a final voltage of 3.0 V and a rate of 0.1 C, and the number of times of charging/discharging was 20.

### 3-6. Vibration test

Vibration tests were performed such that the lithium-ion secondary batteries respectively obtained in the first to fifth secondary battery production tests were fully charged and vibrated in directions along three axes (x-axis direction, γ-axis direction, and z-axis direction) for 15 minutes × 12 times (nine hours in total) under conditions: a frequency of 5 to 200 to 5 Hz and an acceleration peak of 1 to 8 to 1 gn. Table 1 shows results of the vibration tests and results of the first to fifth secondary battery production tests.

It is found from the results of the vibration tests that abnormality was not observed in any of the secondary batteries and that all the positive electrode sheets 10 and negative electrode sheets 11 were electrically connected respectively to the connection terminals 13 for the positive/negative electrodes.

**Table 1**

| | Battery shape | Battery size | | | Number produced | Battery (Ah) | Cycle characteristic | Vibration test |
|---|---|---|---|---|---|---|---|---|
| | | Length (mm) | Width (mm) | Thickness (mm) | | | Retention (%) | |
| First secondary battery production test | Laminated | 180 | 80 | 5 | 5 | 0.4 | 96-98 | No problem |
| Second secondary battery production test | Laminated | 180 | 80 | 5 | 5 | 4 | 95-98 | No problem |
| Third secondary battery production test | Laminated | 180 | 80 | 5 | 5 | 4 | 95-98 | No problem |
| Fourth secondary battery production test | Wound | 85 | 50 | 25 | 5 | 4 | 97-98 | No problem |
| Fifth secondary battery production test | Laminated | 180 | 80 | 5 | 5 | 2 | 97-98 | No problem |

## Claims

1. An electrode sheet, which is a positive electrode sheet formed by laminating a conductive layer and a positive electrode active material layer in this order on each surface of a resin film, or is a negative electrode sheet formed by laminating a conductive layer and a negative electrode active material layer in this order on each surface of a resin film, each of the positive and the negative electrode active material layers being partially provided to the conductive layer, wherein
the electrode sheet has a partially folded section where the electrode sheet with the conductive layer but without the positive and the negative electrode active material layers is folded twice or more in the same direction, and
the conductive layers provided on the both surfaces of the resin film are electrically connected with each other in the folded section.

2. The electrode sheet according to claim 1, wherein the folded section without the positive and the negative electrode active material layers has a thickness smaller than that of the positive electrode sheet with the positive electrode active material layer or of the negative electrode sheet with the negative electrode active material layer.

3. A secondary battery comprising the positive electrode sheet and the negative electrode sheet according to claim 1 wherein the positive and the negative electrode sheets are provided with a separator interposed therebetween and packaged with a packaging material together with an electrolyte.

4. The secondary battery according to claim 3, wherein
the positive and the negative electrode sheets are alternately arranged, and
at least either the positive or the negative electrode sheet is plural in number.

5. The secondary battery according to claim 4, further comprising a welded section formed by overlapping and welding the plurality of folded sections.

6. The secondary battery according to claim 5, further comprising a connection terminal welded to the welded section.

7. The secondary battery according to claim 6, wherein
both the positive and the negative electrode sheets are plural in number, each of which is partially the folded section, wherein
the folded sections comprising the positive electrode sheets form a positive electrode welded section, and
the folded sections comprising the negative electrode sheets form a negative electrode welded section.

8. The secondary battery according to claim 3, wherein the positive or the negative electrode sheet has a folded section that is projected therefrom.

9. The secondary battery according to claim 8, wherein at least three folded sections form a welded section,
a first of which overlaps with a part of a second folded section adjacent thereto; and a part of a second folded section where does not overlap with the first folded section overlaps with a third folded section adjacent to the second folded section.

10. The secondary battery according to claim 3, wherein the separator has a softening temperature higher than that of the resin film.

11. The secondary battery according to claim 3, which is a lithium-ion secondary battery.

12. A method for manufacturing a secondary battery, comprising the steps of:
laminating a conductive layer and a positive electrode active material layer in this order on each surface of a resin film, the positive electrode active material layer being partially provided to the conductive layer;
partially folding, twice or more in the same direction, the resin film with the conductive layer but without the positive electrode active material layer so that a positive electrode sheet is formed, in which the conductive layers provided on the both surfaces of the resin film are electrically connected with each other;
laminating a conductive layer and a negative electrode active material layer in this order on each surface of a resin film, the negative electrode active material layer being partially provided to the conductive layer;
partially folding, twice or more in the same direction, the resin film with the conductive layer but without the negative electrode active material layer so that a negative electrode sheet is formed, in which the conductive layers provided on the both surfaces of the resin film are electrically connected with each other;
interposing a separator between the positive electrode sheet and the negative electrode sheet; and
packaging, with a packaging material, the positive and the negative electrode sheets and the separator together with an electrolyte.
